# EUROPEAN PATENT APPLICATION

(11) **EP 4 811 845 A1**
(43) Date of publication of application: **23.09.2026**
(21) Application number: 24890856.8
(22) Date of filing: 18.11.2024
(51) Int. Cl.: H04W 12/48

(54) **VERIFICATION METHOD AND APPARATUS, DEVICE, READABLE STORAGE MEDIUM, AND PROGRAM PRODUCT**

(30) Priority: 17.11.2023 CN 202311536497
(71) Applicant: Giesecke+Devrient Mobile Security Germany GmbH, 81677 München (DE)
(72) Inventor: LIU, Yongjian, Beijing 100022 (CN); CHEN, Hong, Beijing 100022 (CN)
(74) Representative: Giesecke+Devrient IP
(86) International application number: PCT/CN2024/132683
(87) International publication number: WO 2025/103504

(57) **Abstract**

Embodiments of the present application relate to the technical field of communications, and disclose a verification method and apparatus, a device, a readable storage medium, and a program product. The verification method is applied to a smart card, the smart card comprises a telecommunication card, and the smart card is communicatively connected to a terminal. The method comprises: when a first verification instruction is received, encrypting a first verification parameter by means of a first public key to obtain a first encryption result; signing the first encryption result by means of a second private key to obtain a first signature result, and sending the first encryption result and the first signature result to the terminal; when a second encryption result and a second signature result are received, performing signature verification on the second signature result by means of the first public key, and when the signature verification is passed, decrypting the second encryption result by means of the second private key to obtain a second verification parameter; and if verification of the second verification parameter is passed, determining that verification of the terminal is passed. The embodiments of the present application allow for verification of the legitimacy between a smart card and a terminal.

## Description

### Technical field

The present application belongs to the technical field of communication, in particular to a verification method and apparatus, a device, a readable storage medium and a program product.

### Background art

After a terminal and a smart card are bound, the smart card can be used on the terminal.

In the related art, the binding relationship between the smart card and the terminal is usually maintained by a physical patch. An illegitimate user can remove the smart card from the terminal, and then physically bind the smart card to another terminal for illegitimate use by means of the physical patch. In other words, the above-mentioned way of maintaining the binding relationship between the smart card and the terminal has the problem that the smart card is illegitimately used.

### Summary of the invention

Embodiments of the present application provide a verification method and apparatus, a device, a readable storage medium, and a program product, which can verify legitimacy between a smart card and a terminal.

In a first aspect, embodiments of the present application provide a verification method, which is applied to a smart card, and the smart card is in communication connection with a terminal, the method comprising:
in a scenario in which a first verification instruction is received, encrypting a first verification parameter with a first public key, to obtain a first encrypted result, a smart card comprising the first public key and the first verification parameter, and the first verification parameter comprising a first terminal fingerprint and a first verification code; the first terminal fingerprint being used for representing a unique identifier of a terminal corresponding to the smart card, and a first verification instruction being sent to the smart card by the terminal in a scenario in which the terminal detects that the smart card is powered on and acquires a binding status of the smart card, and the binding status is bound;
signing the first encrypted result with a second private key, to obtain a first signed result, and sending the first encrypted result and the first signed result to the terminal, such that the terminal, in a scenario in which the first encrypted result and the first signed result are received thereby, verifies a signature of the first signed result with a second public key, and, in a scenario in which signature verification is passed, decrypts the first encrypted result with a first private key, to obtain the first verification parameter, and verifies the first terminal fingerprint with a second terminal fingerprint, and, in a scenario in which verification is passed, determines that the smart card verification passes, and encrypts a second verification parameter with the second public key, to obtain a second encrypted result, signs the second encrypted result with the first private key, to obtain a second signed result, and sends the second encrypted result and the second signed result to the smart card; the terminal comprising the second public key and the first private key, the first public key corresponding to the first private key, and the second public key corresponding to the second private key; the terminal comprising a second verification code and a second terminal fingerprint, the second verification parameter comprising the second terminal fingerprint, the first verification code and the second verification code, and the second terminal fingerprint being used for representing a unique identifier of the terminal;
in a scenario in which the second encrypted result and the second signed result are received, verifying a signature of the second signed result with the first public key, and, in a scenario in which signature verification is passed, decrypting the second encrypted result with the second private key, to obtain the second verification parameter;
in a scenario in which second verification parameter verification is passed, determining that the terminal verification passes.

In some optional embodiments of the first aspect, before the step of encrypting the first verification parameter with the first public key, to obtain the first encrypted result, the method further comprises:
in a scenario in which a binding instruction sent by the terminal is received, encrypting the second public key with a third public key, to obtain a third encrypted result, and sending the third encrypted result to the terminal, such that the terminal, in a scenario in which the third encrypted result is received thereby, decrypts the third encrypted result with a third private key, to obtain the second public key, encrypts a third verification parameter with the second public key, to obtain a fourth encrypted result, signs the fourth encrypted result with a third private key, to obtain a third signed result, and sends the fourth encrypted result and the third signed result to the smart card; the smart card comprising the second public key and the third public key, the terminal comprising the third private key, and the third public key corresponding to the third private key; the third verification parameter comprising the first terminal fingerprint and the first public key, and the binding instruction being sent to the smart card by the terminal in a scenario in which the binding status is unbound;
in a scenario in which the fourth encrypted result and the third signed result are received, verifying a signature of the third signed result with the third public key, and, in a scenario in which signature verification is passed, decrypting the fourth encrypted result with the second private key, to obtain the third verification parameter.

In some optional embodiments of the first aspect, the first public key and the first private key and the first public key are all generated by the terminal, and the first public key is sent to the smart card by the terminal;
the second public key and the second private key are both generated by the smart card, and the second public key is sent to the terminal by the smart card.

In some optional embodiments of the first aspect, the third public key and the third private key are both generated by the terminal.

In some optional embodiments of the first aspect, in a scenario in which it is determined that the terminal does not pass, the method further comprises:
in a scenario in which the smart card is powered on, sending a second verification instruction to the terminal, such that the terminal, in a scenario in which the second verification instruction is received thereby, verifies first identifier information with second identifier information, and, in a scenario in which verification is passed, sends verification success information to the smart card, the second verification instruction comprising the first identifier information, the first identifier information being used for representing a unique identifier of the smart card, the second identifier information being used for representing a unique identifier of a smart card corresponding to the terminal, and the verification success information being used for representing a first identifier information verification success;
in a scenario in which the verification success information is received, sending a third verification code to the terminal, such that the terminal, in a scenario in which the third verification code is received thereby, generates a first cryptographic key with the first identifier information and the third verification code, and sends the first cryptographic key to the smart card; the first cryptographic key being generated with the third verification code and the first identifier information, and the first cryptographic key being sent to the terminal; the smart card comprising the third verification code;
in a scenario in which the first cryptographic key is received, verifying the first cryptographic key with a second cryptographic key, and, in a scenario in which verification is successful, determining that the terminal passes verification, and the second cryptographic key being generated by the smart card according to the third verification code and the first identifier information.

Based on the same inventive concept, in a second aspect, embodiments of the present application provide a verification method, which is applied to a terminal, and the terminal is in communication connection with a smart card, the method comprising:
in a scenario in which it is detected that a smart card is powered on, acquiring a binding status of the smart card;
in a scenario in which the binding status is bound, sending a first verification instruction to the smart card, such that the smart card, in a scenario in which the first verification instruction is received thereby, encrypts a first verification parameter with a first public key, to obtain a first encrypted result, signs the first encrypted result with a second private key, to obtain a first signed result, and sends the first encrypted result and the first signed result to the terminal; the smart card comprising the first public key and the first verification parameter, the first verification parameter comprising the first terminal fingerprint and the first verification code; the first terminal fingerprint being used for representing a unique identifier of a terminal corresponding to the smart card;
in a scenario in which the first encrypted result and the first signed result are received, verifying a signature of the first signed result with a second public key, and, in a scenario in which signature verification is passed, decrypting the first encrypted result with a first private key, to obtain the first verification parameter; the terminal comprising the second public key and the first private key, the first public key corresponding to the first private key, and the second public key corresponding to the second private key;
verifying the first terminal fingerprint with a second terminal fingerprint, and, in a scenario in which verification is passed, determining that the smart card verification passes, and encrypting the second verification parameter with the second public key, to obtain a second encrypted result; the terminal comprising a second verification code and the second terminal fingerprint, the second verification parameter comprising the second terminal fingerprint, the first verification code and the second verification code, and the second terminal fingerprint being used for representing a unique identifier of the terminal;
signing the second encrypted result with the first private key, to obtain a second signed result, and sending the second encrypted result and the second signed result to the smart card, such that the smart card, in a scenario in which the second encrypted result and the second signed result are received thereby, verifies a signature of the second signed result with the first public key, and, in a scenario in which signature verification is passed, decrypts the second encrypted result with the second private key, to obtain the second verification parameter, and, in a scenario in which the second verification parameter verification is passed, determines that the terminal verification passes.

In some optional embodiments of the second aspect, before the step of acquiring the binding status of the smart card, the method further comprises:
in a scenario in which the binding status is unbound, sending a binding instruction to the smart card, such that the smart card, in a scenario in which the binding instruction is received thereby, encrypts the second public key with a third public key, to obtain a third encrypted result;
in a scenario in which the third encrypted result is received, decrypting the third encrypted result with a third private key, to obtain the second public key; the third encrypted result being obtained by the smart card encrypting the second public key with the third public key, the smart card comprising the second public key and the third public key, the terminal comprising the third private key, and the third public key corresponding to the third private key;
encrypting a third verification parameter with the second public key, to obtain a fourth encrypted result, and signing the fourth encrypted result with the third private key, to obtain a third signed result, the third verification parameter comprising a first terminal fingerprint and the first public key;
sending the fourth encrypted result and the third signed result to the smart card, such that the smart card, in a scenario in which the fourth encrypted result and the third signed result are received thereby, verifies a signature of the third signed result with the third public key, and, in a scenario in which signature verification is passed, decrypts the fourth encrypted result with the second private key, to obtain the third verification parameter.

In some optional embodiments of the second aspect, the method further comprises:
in a scenario in which a second verification instruction is received, verifying first identifier information with second identifier information, and, in a scenario in which verification is passed, sending verification success information to the smart card, such that the smart card, in a scenario in which the verification success information is received thereby, sends a third verification code to the terminal, the smart card comprising the third verification code; the second verification instruction comprising the first identifier information, the first identifier information being used for representing a unique identifier of the smart card, the second identifier information being used for representing a unique identifier of a smart card corresponding to the terminal, and the verification success information being used for representing a first identifier information verification success;
in a scenario in which the third verification code is received, generating a first cryptographic key with the first identifier information and the third verification code, and sending the first cryptographic key to the smart card, such that the smart card, in a scenario in which the first cryptographic key is received thereby, verifies the first cryptographic key with a second cryptographic key, and, in a scenario in which verification is successful, determines that the terminal passes verification, the second cryptographic key being generated by the smart card according to the third verification code and the first identifier information.

Based on the same inventive concept, in a third aspect, embodiments of the present application provide a verification apparatus, which is applied to a smart card, and the smart card is in communication connection with a terminal, the apparatus comprising:
a first encryption module, which is used, in a scenario in which a first verification instruction is received thereby, for encrypting a first verification parameter with a first public key, to obtain a first encrypted result, a smart card comprising the first public key and the first verification parameter, and the first verification parameter comprising a first terminal fingerprint and a first verification code; the first terminal fingerprint being used for representing a unique identifier of a terminal corresponding to the smart card, and a first verification instruction being sent to the smart card by the terminal in a scenario in which the terminal detects that the smart card is powered on and acquires a binding status of the smart card, and the binding status is bound;
a first signing module, which is used for signing the first encrypted result with a second private key, to obtain a first signed result, and sending the first encrypted result and the first signed result to the terminal, such that the terminal, in a scenario in which the first encrypted result and the first signed result are received thereby, verifies a signature of the first signed result with a second public key, and, in a scenario in which signature verification is passed, decrypts the first encrypted result with a first private key, to obtain the first verification parameter, and verifies the first terminal fingerprint with a second terminal fingerprint, and, in a scenario in which verification is passed, determines that the smart card verification passes, and encrypts a second verification parameter with the second public key, to obtain a second encrypted result, signs the second encrypted result with the first private key, to obtain a second signed result, and sends the second encrypted result and the second signed result to the smart card; the terminal comprising the second public key and the first private key, the first public key corresponding to the first private key, and the second public key corresponding to the second private key; the terminal comprising a second verification code and a second terminal fingerprint, the second verification parameter comprising the second terminal fingerprint, the first verification code and the second verification code, and the second terminal fingerprint being used for representing a unique identifier of the terminal;
a first signature verification module, which is used, in a scenario in which the second encrypted result and the second signed result are received thereby, for verifying a signature of the second signed result with the first public key, and, in a scenario in which signature verification is passed, decrypting the second encrypted result with the second private key, to obtain the second verification parameter;
a first determination module, which is used, in a scenario in which the second verification parameter verification is passed, for determining that the terminal verification passes.

Based on the same inventive concept, in a fourth aspect, embodiments of the present application provide a verification apparatus, which is applied to a terminal, and the terminal is in communication connection with a smart card, the apparatus comprising:
an acquisition module, which is used, in a scenario in which it is detected that the smart card is powered on, for acquiring a binding status of the smart card;
a first sending module, which is used, in a scenario in which the binding status is bound, for sending a first verification instruction to the smart card, such that the smart card, in a scenario in which the first verification instruction is received thereby, encrypts a first verification parameter with a first public key, to obtain a first encrypted result, signs the first encrypted result with a second private key, to obtain a first signed result, and sends the first encrypted result and the first signed result to the terminal; the smart card comprising the first public key and the first verification parameter, the first verification parameter comprising the first terminal fingerprint and the first verification code; the first terminal fingerprint being used for representing a unique identifier of a terminal corresponding to the smart card;
a second signature verification module, which is used, in a scenario in which the first encrypted result and the first signed result are received thereby, for verifying a signature of the first signed result with a second public key, and, in a scenario in which signature verification is passed, decrypting the first encrypted result with a first private key, to obtain the first verification parameter; the terminal comprising the second public key and the first private key, the first public key corresponding to the first private key, and the second public key corresponding to the second private key;
the first verification module, which is used for verifying the first terminal fingerprint with a second terminal fingerprint, and, in a scenario in which verification is passed, determining that the smart card verification passes, and encrypting the second verification parameter with the second public key, to obtain a second encrypted result; the terminal comprising a second verification code and the second terminal fingerprint, the second verification parameter comprising the second terminal fingerprint, the first verification code and the second verification code, and the second terminal fingerprint being used for representing a unique identifier of the terminal;
a second signing module, which is used for signing the second encrypted result with the first private key, to obtain a second signed result, and sending the second encrypted result and the second signed result to the smart card, such that the smart card, in a scenario in which the second encrypted result and the second signed result are received thereby, verifies a signature of the second signed result with the first public key, and, in a scenario in which signature verification is passed, decrypts the second encrypted result with the second private key, to obtain the second verification parameter, and, in a scenario in which the second verification parameter verification is passed, determines that the terminal verification passes.

Based on the same inventive concept, in a fifth aspect, embodiments of the present application provide an electronic device, the electronic device comprising: a processor and a memory that stores a computer program instruction; when the processor executes the program instruction, the verification method of either the first aspect or the second aspect is implemented.

Based on the same inventive concept, in a sixth aspect, embodiments of the present application provide a computer-readable storage medium, the computer-readable storage medium having a computer program instruction stored thereon; when executed by a processor, the computer program instruction implements the verification method of either the first aspect or the second aspect.

Based on the same inventive concept, in a seventh aspect, embodiments of the present application provide a computer program product; when an instruction in the computer program product is executed by a processor of an electronic device, it causes the electronic device to execute the verification method of either the first aspect or the second aspect.

According to the verification method and apparatus, device, readable storage medium and program product provided in embodiments of the present application, the smart card verifies the first terminal fingerprint by means of the second terminal fingerprint, and determines whether the terminal passes verification, and the terminal verifies whether the smart card passes verification by means of the second verification parameter. In a scenario in which the terminal verification passes and the smart card verification passes, the terminal and the smart card are legitimate relative to each other, and the terminal and the smart card can be bound to each other. In summary, embodiments of the present application are able to verify legitimacy between the smart card and the terminal. In addition, embodiments of the present application encrypt and sign the first verification parameter and the second verification parameter, improving the security of data transmission.

### Brief description of the drawings

To explain the technical solution of embodiments of the present application more clearly, the drawings that need to be used in embodiments of the present application are presented in simple terms below. Those skilled in the art could obtain other drawings based on these drawings without inventive effort.
Fig. 1 is a schematic diagram of an application scenario provided in embodiments of the present application.
Fig. 2 is an interaction schematic diagram of a verification method provided in embodiments of the present application.
Fig. 3 is another interaction schematic diagram of a verification method provided in embodiments of the present application.
Fig. 4 is a schematic flow diagram of a verification method provided in embodiments of the present application.
Fig. 5 is another schematic flow diagram of a verification method provided in embodiments of the present application.
Fig. 6 is another schematic flow diagram of a verification method provided in embodiments of the present application.
Fig. 7 is another schematic flow diagram of a verification method provided in embodiments of the present application.
Fig. 8 is a schematic structural diagram of a verification apparatus provided in embodiments of the present application.
Fig. 9 is another structural schematic diagram of a verification apparatus provided in embodiments of the present application.
Fig. 10 is a structural schematic diagram of an electronic device provided in embodiments of the present application.

### Particular embodiments

Features and exemplary embodiments of various aspects of the present application are described in detail below. To clarify the objective, technical solution and advantages of the present application, the present application is described in further detail below with reference to the drawings and particular embodiments. It should be understood that the particular embodiments described here are merely intended to explain the present application, without limiting it. Those skilled in the art may implement the present application without some of these specific details. The following description of embodiments is merely intended to provide a better understanding of the present application by showing examples of the present application.

It should be explained that relationship terms herein such as first and second are merely used to distinguish one entity or operation from another entity or operation, without necessarily requiring or implying the existence of any such actual relationship or order between these entities or operations. Moreover, the term "comprises", "includes" or any other variant thereof is intended to encompass non-exclusive inclusion, so that a process, method, object or device comprising a series of key elements comprises not only these key elements but also other key elements not explicitly listed, or key elements intrinsic to this process, method, object or device. In the absence of further restrictions, key elements defined by the phrase "comprising..." do not rule out the existence of other identical key elements in the process, method, object or device comprising the key elements.

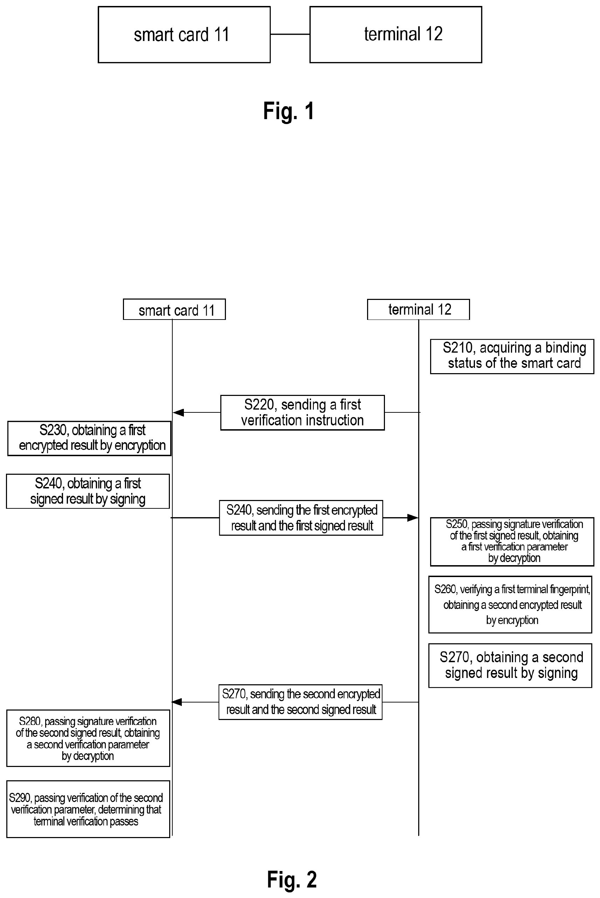

Fig. 1 is a schematic diagram of a scenario of a verification method provided in embodiments of the present application.

As shown in Fig. 1, in this application scenario, a verification system 10 may comprise a smart card 11 and a terminal 12. The smart card 11 may be in communication connection with the terminal 12.

The smart card 11 may comprise an embedded universal integrated circuit card (eUICC), a subscriber identity module (SIM), an embedded subscriber identity module (eSIM), a universal integrated circuit card (UICC), etc.

The terminal 12 may be a device capable of connecting to a computer network or a communication system. For example, terminal 12 may comprise a cell phone, tablet, computer, etc.

In order to solve a problem in the related art of illegitimate use of a smart card in the above-described way of maintaining a binding relationship between a smart card and a terminal, embodiments of the present application provide a verification method and apparatus, a device, a readable storage medium, and a program product. The verification method provided in the embodiments of the present application is first described below in conjunction with the accompanying drawings.

Fig. 2 is an interaction schematic diagram of a verification method provided in embodiments of the present application.

As shown in Fig. 2, the verification method can be performed by a smart card and a terminal. The verification method may comprise S210 to S290.

S210, a terminal, in a scenario in which it is detected that a smart card is powered on, acquiring a binding status of the smart card.

S220, the terminal, in a scenario in which the binding status is bound, sending a first verification instruction to the smart card.

S230, the smart card, in a scenario in which the first verification instruction is received thereby, encrypting a first verification parameter with a first public key, to obtain a first encrypted result. The smart card comprises the first public key and the first verification parameter, the first verification parameter comprising a first terminal fingerprint and a first verification code; the first terminal fingerprint is used to represent a unique identifier of a terminal corresponding to the smart card.

S240, the smart card signing the first encrypted result with a second private key, to obtain a first signed result, and sending the first encrypted result and the first signed result to the terminal.

S250, the terminal, in a scenario in which the first encrypted result and the first signed result are received thereby, verifying a signature of the first signed result with a second public key, and, in a scenario in which signature verification is passed, decrypting the first encrypted result with a first private key, to obtain the first verification parameter; the terminal comprising the second public key and the first private key, the first public key corresponding to the first private key, and the second public key corresponding to the second private key.

S260, the terminal verifying the first terminal fingerprint with a second terminal fingerprint, and, in a scenario in which verification is passed, determining that the smart card verification passes, and encrypting the second verification parameter with the second public key, to obtain a second encrypted result; the terminal comprising a second verification code and the second terminal fingerprint, the second verification parameter comprising the second terminal fingerprint, the first verification code and the second verification code, and the second terminal fingerprint being used for representing a unique identifier of the terminal.

S270, the terminal signing the second encrypted result with the first private key, to obtain a second signed result, and sending the second encrypted result and the second signed result to the smart card.

S280, the smart card, in a scenario in which the second encrypted result and the second signed result are received thereby, verifying a signature of the second signed result with the first public key, and, in a scenario in which signature verification is passed, decrypting the second encrypted result with the second private key, to obtain the second verification parameter.

S290, the smart card, in a scenario in which second verification parameter verification is passed, determining that the terminal verification passes.

According to the verification method provided in embodiments of the present application, the smart card verifies the first terminal fingerprint by means of the second terminal fingerprint, and determines whether the terminal passes verification, and the terminal verifies whether the smart card passes verification by means of the second verification parameter. In a scenario in which the terminal verification passes and the smart card verification passes, the terminal and the smart card are legitimate relative to each other, and the terminal and the smart card can be bound to each other. In summary, embodiments of the present application are able to verify legitimacy between the smart card and the terminal. In addition, embodiments of the present application encrypt and sign the first verification parameter and the second verification parameter, improving the security of data transmission.

The following describes the specific implementation of S210 to S290 described above.

In S210, powering on the smart card can be connecting the smart card to a power source.

The binding status of the smart card can be either bound or unbound. The binding status of the smart card is used for representing whether the smart card is bound to a terminal or to a device other than a terminal.

Optionally, the terminal acquires the binding status of the smart card after detecting that the smart card is powered on and the smart card has been fully initialized.

Illustratively, the step of the terminal acquiring the binding status of the smart card may comprise:
the terminal sending a binding status acquisition instruction to the smart card, the binding status acquisition instruction being used for instructing the smart card to send the binding status of the smart card to the terminal;
the smart card, in a scenario in which the binding status acquisition instruction is received thereby, sending the binding status of the smart card to the terminal, the smart card comprising the binding status of the smart card.

In S220, the terminal, in a scenario in which it is detected that the smart card is powered on, after acquiring the binding status of the smart card, may further, in a scenario in which the binding status is bound, send a first verification instruction to the smart card.

The first verification instruction may be used for instructing the smart card to encrypt the first verification parameter with the first public key.

In step S230, after the terminal, in a scenario in which the binding status is bound, sends a first verification instruction to the smart card, the smart card, in a scenario in which the first verification instruction is received thereby, encrypts the first verification parameter with the first public key, to obtain a first encrypted result.

The smart card and terminal may correspond to each other such that the smart card and terminal are legitimate relative to each other.

The first terminal fingerprint may comprise a serial number of the terminal corresponding to the smart card, etc.

The first terminal fingerprint may be obtained by the terminal corresponding to the smart card encrypting a hardware parameter of itself, and also may be obtained by the terminal corresponding to the smart card encrypting a hardware parameter and a software parameter of itself. The hardware parameter may comprise a device brand, a device model, an operating system type, an operating system version, etc. The software parameter may comprise a list of application programs, an installed plug-in, etc.

Optionally, both the first public key and the first private key may be generated by the terminal, and the first public key may be sent to the smart card by the terminal. The first public key and the first private key may form a first cryptographic key pair. In other words, the first public key may be a terminal public key, and the first private key may be a terminal private key.

Illustratively, the step of encrypting the first verification parameter with the first public key, to obtain a first encrypted result may comprise:
encrypting the first verification parameter with the first public key and a preset asymmetric algorithm, to obtain the first encrypted result.

The preset asymmetric algorithm may comprise an RSA (Rivest-Shamir-Adleman) algorithm, such as RSA2048.

It will be understood that the first verification parameter is encrypted with the first public key and an RSA algorithm, such that transmission of the first verification parameter is more secure, and the RSA algorithm may further be used for generating and verifying a digital signature, and can verify the integrity and authenticity of data.

Optionally, the first verification code may be generated by the smart card in a scenario in which the first verification instruction is received. The first verification code may be a random number. The specific form of the first verification code may be set according to the actual scenario and is not limited herein; for example, the first verification code may comprise at least one of a number and a letter, etc.

In S240, after the smart card, in a scenario in which the first verification instruction is received thereby, encrypts the first verification parameter with the first public key, to obtain the first encrypted result, the smart card can further sign the first encrypted result with a second private key, to obtain a first signed result, and sends the first encrypted result and the first signed result to the terminal.

Optionally, the second public key and the second private key may both be generated by the smart card, and the second public key is sent to the terminal by the smart card. The second public key and the second private key may form a second cryptographic key pair. In other words, the second public key may be a smart card public key, and the second private key may be a smart card private key.

Illustratively, the step of signing the first encrypted result with the second private key, to obtain the first signed result, may comprise:
signing the first encrypted result with the second private key and a preset signature algorithm, to obtain the first signed result.

The preset signature algorithm may comprise the digital signature algorithm (DSA).

It will be understood that the smart card, in a scenario in which the first verification instruction is not received thereby, does not perform any operation.

In S250, after the smart card signs the first encrypted result with the second private key, to obtain the first signed result, and sends the first encrypted result and the first signed result to the terminal, the terminal, in a scenario in which the first encrypted result and the first signed result are received thereby, verifies a signature of the first signed result with the second public key, and, in a scenario in which signature verification is passed, decrypts the first encrypted result with the first private key, to obtain the first verification parameter.

In a scenario in which signature verification is passed, the first signed result may be considered integral. In a scenario in which signature verification is not passed, the first signed result may be considered not integral.

Optionally, in a scenario in which signature verification is not passed, the terminal may output first notification information, and the first notification information may be used for notifying a user that the signature of the first signed result does not pass verification.

Illustratively, the step of decrypting the first encrypted result with the first private key, to obtain the first verification parameter may comprise:
decrypting the first encrypted result with the first private key and a preset asymmetric algorithm, to obtain the first verification parameter.

In S260, the terminal, in a scenario in which the first encrypted result and the first signed result are received thereby, after verifying the signature of the first signed result with the second public key, and, in a scenario in which signature verification is passed, decrypting the first encrypted result with the first private key, to obtain the first verification parameter, may further verify the first terminal fingerprint with the second terminal fingerprint, and, in a scenario in which verification is passed, determines that the smart card verification passes, and encrypts the second verification parameter with the second public key, to obtain the second encrypted result.

The second terminal fingerprint may comprise a serial number of the terminal, etc.

The second terminal fingerprint may be obtained by the terminal encrypting a hardware parameter of itself, and also may be obtained by the terminal encrypting a hardware parameter and a software parameter of itself. The hardware parameter may comprise a device brand, a device model, an operating system type, an operating system version, etc. The software parameter may comprise a list of application programs, an installed plug-in, etc.

Optionally, in a scenario in which the second terminal fingerprint and the first terminal fingerprint are the same, it is determined that verification passes; in a scenario in which the second terminal fingerprint and the first terminal fingerprint are not the same, it is determined that verification does not pass.

Optionally, the second verification code may be generated by the terminal in a scenario in which it is determined that smart card verification passes. The second verification code may be a random number. The specific form of the second verification code may be set according to the actual scenario and is not limited herein; for example, the second verification code may comprise at least one of a number and a letter, etc.

The first verification code and the second verification code may be the same or different, and are not limited herein.

Illustratively, the step of encrypting the second verification parameter with the second public key, to obtain a second encrypted result may comprise:
encrypting the second verification parameter with the second public key and a preset asymmetric algorithm, to obtain the second encrypted result.

It will be understood that the terminal verifies the first terminal fingerprint with the second terminal fingerprint, and, in a scenario in which verification is not passed, the terminal determines that smart card verification does not pass, and the terminal outputs second notification information, and the second notification information may be used for notifying a user that the smart card verification is not passed.

In S270, the terminal, after verifying the first terminal fingerprint with the second terminal fingerprint, and, in a scenario in which verification is passed, determining that smart card verification passes, and encrypting the second verification parameter with the second public key, to obtain the second encrypted result, may further sign the first encrypted result with the first private key, to obtain a second signed result, and sends the second encrypted result and the second signed result to the smart card.

Illustratively, the step of the terminal signing the second encrypted result with the first private key, to obtain the second signed result, may comprise:
the terminal signing the second encrypted result with the first private key and a preset signature algorithm, to obtain the second signed result.

In S280, after the terminal signs the second encrypted result with the first private key, to obtain the second signed result, and sends the second encrypted result and the second signed result to the smart card, the smart card, in a scenario in which the second encrypted result and the second signed result are received thereby, verifies a signature of the second signed result with the first public key, and, in a scenario in which signature verification is passed, decrypts the second encrypted result with the second private key, to obtain the second verification parameter.

In a scenario in which signature verification is passed, the second signed result may be considered integral. In a scenario in which signature verification is not passed, the second signed result may be considered not integral.

Optionally, in a scenario in which signature verification is not passed, the terminal may output third notification information, and the third notification information may be used for notifying a user that the signature of the second signed result does not pass verification.

Illustratively, the step of decrypting the second encrypted result with the second private key, to obtain the second verification parameter may comprise:
decrypting the second encrypted result with the second private key and a preset asymmetric algorithm, to obtain the second verification parameter.

In S290, the smart card, in a scenario in which the second encrypted result and the second signed result are received thereby, after verifying a signature of the second signed result with the first public key, and, in a scenario in which signature verification is passed, decrypting the second encrypted result with the second private key, to obtain the second verification parameter, determines that terminal verification passes in a scenario in which second verification parameter verification is passed.

Illustratively, in a scenario in which the first terminal fingerprint and the second terminal fingerprint are the same, it is determined that terminal verification passes.

It will be understood that in a scenario in which the first terminal fingerprint and the second terminal fingerprint are not the same, it is determined that terminal verification does not pass. At this time, since terminal verification is not passed, i.e. for the smart card, the terminal is illegitimate, the terminal and the smart card cannot be bound.

In embodiments of the present application, the first verification code may be used for obfuscating data, such as the second terminal fingerprint.

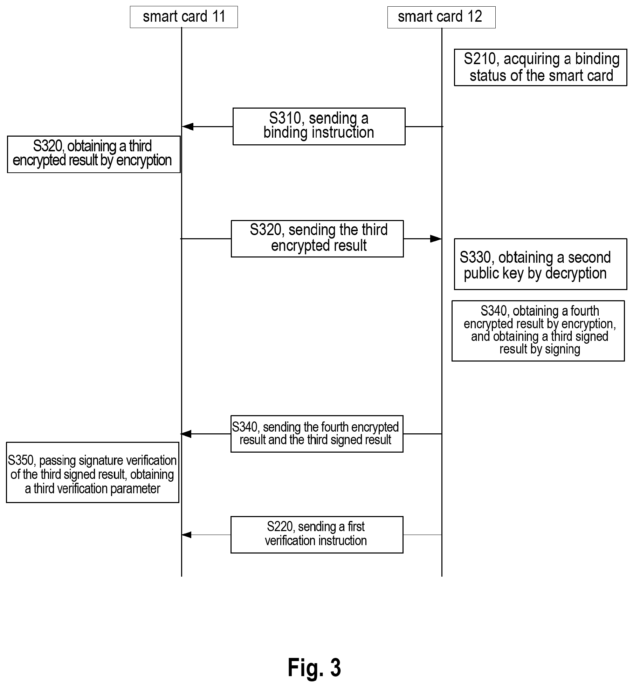

In some optional embodiments, as shown in Fig. 3, after the terminal acquires the binding status of the smart card, i.e. after S210, the verification method may further comprise S310 to S350.

S310, the terminal, in a scenario in which the binding status is unbound, sending a binding instruction to the smart card;

S320, the smart card, in a scenario in which the binding instruction sent by the terminal is received thereby, encrypting the second public key with a third public key, to obtain a third encrypted result, and sending the third encrypted result to the terminal, and the smart card comprising the second public key and the third public key;

S330, the terminal, in a scenario in which the third encrypted result is received thereby, decrypting the third encrypted result with a third private key, to obtain the second public key. The terminal comprises the third private key, and the third public key corresponds to the third private key.

S340, the terminal encrypting the third verification parameter with the second public key, to obtain a fourth encrypted result, and signing the fourth encrypted result with the third private key, to obtain a third signed result, and sending the fourth encrypted result and the third signed result to the smart card. The third verification parameter comprises the first terminal fingerprint and the first public key.

S350, the smart card, in a scenario in which the fourth encrypted result and the third signed result are received thereby, verifying a signature of the third signed result with the third public key, and, in a scenario in which signature verification is passed, decrypting the fourth encrypted result with the second private key, to obtain the third verification parameter.

In embodiments of the present application, by means of an encryption interaction between the terminal and the smart card, the third verification parameter can be securely and accurately transmitted from the terminal to the smart card, providing a basis for subsequent use of the third verification parameter.

In S1, the binding instruction may be an instruction for instructing the smart card to encrypt the second public key with the third public key.

In S2, illustratively, the step of encrypting the second public key with the third public key, to obtain the third encrypted result may comprise:
encrypting the second public key with the third public key and a preset asymmetric algorithm, to obtain the third encrypted result.

Optionally, the smart card, in a scenario in which the binding instruction sent by the terminal is received thereby, may further generate the second public key and the second private key.

In S3, illustratively, both the third public key and the third private key are generated by the terminal. The terminal, in a scenario in which the third private key and the third public key are generated thereby, sends the third public key to a smart card provider by a secure means such as third public key encryption, and the third public key is provided in the smart card in advance by the smart card merchant. Illustratively, the third public key may be a protected public key, the third private key may be a protected private key, and the third cryptographic key pair may be a protected key pair.

The step of decrypting the third encrypted result with the third private key, to obtain the second public key may comprise:
decrypting the third encrypted result with the third private key and a preset asymmetric algorithm, to obtain the second public key.

In S4, illustratively, the step of encrypting the third verification parameter with the second public key, to obtain a fourth encrypted result may comprise:
encrypting the third verification parameter with the second public key and a preset asymmetric algorithm, to obtain the fourth encrypted result.

Illustratively, the step of signing the fourth encrypted result with the third private key, to obtain the third signed result, may comprise:
signing the fourth encrypted result with the third private key and a preset signature algorithm, to obtain the third signed result.

In S5, in a scenario in which signature verification is passed, the third signed result may be considered integral. In a scenario in which signature verification is not passed, the third signed result may be considered not integral.

Optionally, in a scenario in which signature verification is not passed, the terminal may output fourth notification information, and the fourth notification information may be used for notifying a user that the signature of the third signed result does not pass verification.

Illustratively, the step of decrypting the fourth encrypted result with the second private key, to obtain the third verification parameter may comprise:
decrypting the fourth encrypted result with the second private key and a preset asymmetric algorithm, to obtain the third verification parameter.

It will be understood that, in embodiments of the present application, legitimacy between the smart card and the terminal can be verified by means of encryption by a preset asymmetric algorithm and signing by a preset signature algorithm, and, in a scenario in which verification of the legitimacy between the smart card and the terminal is passed, i.e. in a scenario in which the smart card and the terminal both pass verification, the smart card and the terminal may be bound.

Illustratively, the terminal, in a scenario in which the binding status is unbound, sends a binding instruction to the smart card, and a smart card eUICC generates an eUICC cryptographic key pair (i.e. the second cryptographic key pair), encrypts eUICC PK (i.e. the second public key) using Protection PK (i.e. the third public key), and then sends the encrypted result to the terminal. The terminal performs decryption using Protection SK (i.e. the third private key) to acquire the eUICC PK. The terminal computes Device FingerPrint (i.e. the first terminal fingerprint) and generates a Device cryptographic key pair (i.e. the first cryptographic key pair). The terminal uses eUICC PK to encrypt Device FingerPrint and Device PK (i.e. the first public key). The terminal uses Protection SK (i.e. the third private key) to generate a signature for an encrypted result of Device FingerPrint and Device PK. The terminal sends the encrypted result and the signed result of Device FingerPrint and Device PK to the smart card eUICC. The smart card eUICC uses Protection PK (the third public key) to perform signature verification, affirming data legitimacy. In a scenario in which data is legitimate, the smart card eUICC decrypts the encrypted result of Device FingerPrint and Device PK using eUICC SK (the second private key), to obtain Device FingerPrint and Device PK.

In embodiments of the present application, each time the terminal is powered on, the binding status of the smart card is first acquired, i.e. a machine-card binding status inquiry is made, and, if the binding status of the smart card is unbound, then the machine-card binding workflow of S310 to S350 as shown in Fig. 3 is executed, and then the machine-card verification workflow of S220 to S290 as shown in Fig. 2 is executed; if the binding status of the smart card is bound, then the machine-card verification workflow of S210 to S290 as shown in Fig. 2 is executed.

In some optional embodiments, in a scenario in which it is determined that the terminal does not pass, the verification method may further comprise S11 to S15.

S11, in a scenario in which the smart card is powered on, the smart card sending a second verification instruction to the terminal, the second verification instruction comprising first identifier information, and the first identifier information being used for representing a unique identifier of the smart card.

S12, the terminal, in a scenario in which the second verification instruction is received thereby, verifying the first identifier information with second identifier information, and, in a scenario in which verification is passed, sending verification success information to the smart card, the second identifier information being used for representing a unique identifier of a smart card corresponding to the terminal, and the verification success information being used for representing a first identifier information verification success.

S13, the smart card, in a scenario in which the verification success information is received thereby, sending a third verification code to the terminal, the smart card comprising the third verification code.

S14, the terminal, in a scenario in which the third verification code is received thereby, generating a first cryptographic key with the first identifier information and the third verification code, and sending the first cryptographic key to the smart card.

S15, the smart card, in a scenario in which the first cryptographic key is received thereby, verifying the first cryptographic key with a second cryptographic key, and, in a scenario in which verification is successful, determining that the terminal passes verification, and the second cryptographic key being generated by the smart card according to the third verification code and the first identifier information.

In the present embodiment, in a scenario in which the terminal does not pass, the first cryptographic key is verified with the second cryptographic key, and the terminal may be verified again.

It will be understood that in a scenario in which a user has multiple terminals and needs to use a terminal other than the terminal corresponding to the smart card to use the smart card, the terminal may be verified by the means described above, to improve the flexibility of use of the smart card.

In S11, the second verification instruction may be used for instructing the terminal to verify the first identifier information with the second identifier information.

The first identifier information may comprise a serial number of the smart card, etc.

In S12, the second identifier information may comprise a serial number of the smart card corresponding to the terminal, etc.

Optionally, in a scenario in which the first identifier information and the second identifier information are the same, it is determined that verification passes, and it can be determined that the smart card passes verification, i.e. the smart card is legitimate; in a scenario in which the first identifier information and the second identifier information are not the same, it is determined that verification does not pass, and it can be determined that the smart card does not pass verification, i.e. the smart card is illegitimate.

Optionally, in a scenario in which verification is not passed, the terminal can output fifth notification information, and the fifth notification information is used for notifying of the failure of verification of the first identifier information of the smart card.

Illustratively, before the terminal is dispatched from a factory, the smart card may transmit the second identifier information to the terminal by an encrypted or other secure transmission means, and the terminal, after receiving the second identifier information, can store the second identifier information in an identifier information whitelist, for subsequently acquiring the second identifier information from the identifier information whitelist.

In S13, the third verification code may be generated by the smart card in a scenario in which verification success information is received. The third verification code may be a random number. The specific form of the third verification code may be set according to the actual scenario and is not limited herein; for example, the third verification code may comprise at least one of a number and a letter, etc.

It will be understood that the smart card, in a scenario in which the verification success information is not received thereby, does not perform any operation.

In S14, illustratively, the step of generating the first cryptographic key with the first identifier information and the third verification code may comprise:
generating the first cryptographic key with the first identifier information, the third verification code and a preset symmetric algorithm.

The preset symmetric algorithm may comprise: at least one of the DES (Data Encryption Standard) algorithm, the 3DES or the AES (Advanced Encryption Standard) algorithm.

In S15, the step of verifying the first cryptographic key with the second cryptographic key may comprise:
in a scenario in which the second cryptographic key and the first cryptographic key are the same, determining that the verification passes;
in a scenario in which the second cryptographic key and the first cryptographic key are different, determining that verification does not pass.

Illustratively, the second cryptographic key may be generated by the smart card according to the third verification code, the first identifier information and a preset symmetric algorithm.

In a scenario in which verification is not passed, it is determined that the terminal does not pass verification, and the smart card and terminal cannot be bound.

Illustratively, the terminal, in a scenario in which first identifier information EID1 is acquired thereby, verifies whether the first identifier information EID1 passes according to the identifier information whitelist, determining that the first identifier information EID1 does not pass verification in a scenario in which second identifier information EID2 is not present in the identifier information whitelist, and determining that the first identifier information EID1 passes verification in a scenario in which second identifier information EID2 is present in the identifier information whitelist. In a scenario in which the first identifier information EID1 passes verification, it is determined that the smart card is legitimate, and the smart card generates a random number eUICC_RNG, and generates a temporary cryptographic key Key_Temp_eUICC based on a symmetric algorithm of eUICC_RNG and EID1. The smart card sends the random number eUICC_RNG to the terminal. After receiving the random number eUICC_RNG, the terminal generates a temporary key Key_Temp_Device based on the stored EID2 and eUICC_RNG, and returns Key_Temp_Device to the smart card. The smart card compares Key_Temp_Device and Key_Temp_eUICC; the terminal is legitimate if the two are the same, and otherwise the terminal is illegitimate.

Based on the same inventive concept, embodiments of the present application also provide a verification method, and the verification method provided by embodiments of the present application is described below in conjunction with the accompanying drawings.

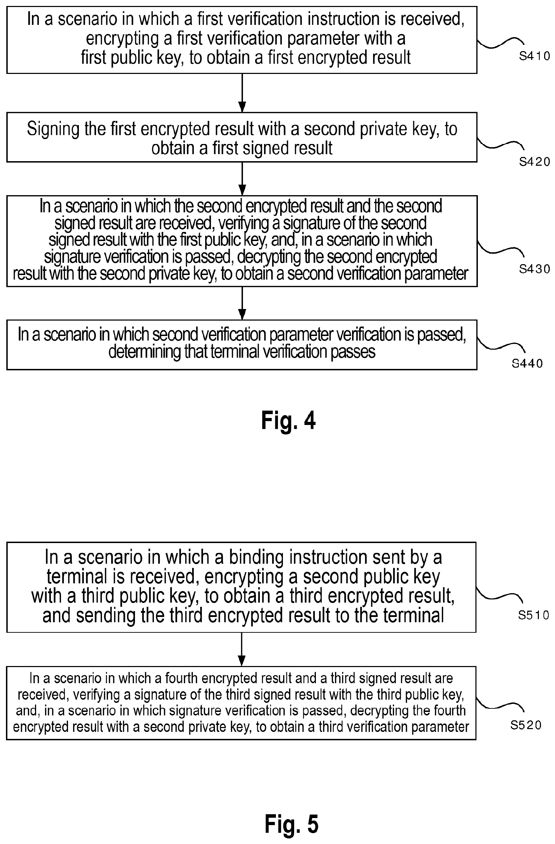

Fig. 4 shows a schematic flow diagram of a verification method provided in embodiments of the present application.

The verification method provided in embodiments of the present application may be applied to a smart card; that is, the method may be executed by a smart card. The smart card is in communication connection with the terminal; as shown in Fig. 4, the method may comprise S410 to S440.

S410, in a scenario in which a first verification instruction is received, encrypting a first verification parameter with a first public key to obtain a first encrypted result, a smart card comprising the first public key and the first verification parameter, and the first verification parameter comprising a first terminal fingerprint and a first verification code; the first terminal fingerprint being used for representing a unique identifier of a terminal corresponding to the smart card, and a first verification instruction being sent to the smart card by the terminal in a scenario in which the terminal detects that the smart card is powered on and acquires a binding status of the smart card, and the binding status is bound.

S420, signing the first encrypted result with a second private key, to obtain a first signed result, and sending the first encrypted result and the first signed result to the terminal, such that the terminal, in a scenario in which the first encrypted result and the first signed result are received thereby, verifies a signature of the first signed result with a second public key, and, in a scenario in which signature verification is passed, decrypts the first encrypted result with a first private key, to obtain the first verification parameter, and verifies the first terminal fingerprint with a second terminal fingerprint, and, in a scenario in which verification is passed, determines that the smart card verification passes, and encrypts a second verification parameter with the second public key, to obtain a second encrypted result, signs the second encrypted result with the first private key, to obtain a second signed result, and sends the second encrypted result and the second signed result to the smart card; the terminal comprising the second public key and the first private key, the first public key corresponding to the first private key, and the second public key corresponding to the second private key; the terminal comprising a second verification code and a second terminal fingerprint, the second verification parameter comprising the second terminal fingerprint, the first verification code and the second verification code, and the second terminal fingerprint being used for representing a unique identifier of the terminal.

S430, in a scenario in which the second encrypted result and the second signed result are received, verifying a signature of the second signed result with the first public key, and, in a scenario in which signature verification is passed, decrypting the second encrypted result with the second private key, to obtain the second verification parameter.

S440, in a scenario in which second verification parameter verification is passed, determining that the terminal verification passes.

According to the verification method provided in embodiments of the present application, the smart card verifies the first terminal fingerprint by means of the second terminal fingerprint, and determines whether the terminal passes verification, and the terminal verifies whether the smart card passes verification by means of the second verification parameter. In a scenario in which the terminal verification passes and the smart card verification passes, the terminal and the smart card are legitimate relative to each other, and the terminal and the smart card can be bound to each other. In summary, embodiments of the present application are able to verify legitimacy between the smart card and the terminal. In addition, embodiments of the present application encrypt and sign the first verification parameter and the second verification parameter, improving the security of data transmission.

In some optional embodiments, as shown in Fig. 5, before the step of encrypting the first verification parameter with the first public key, to obtain the first encrypted result, the method further comprises:

S510, in a scenario in which a binding instruction sent by the terminal is received, encrypting the second public key with a third public key, to obtain a third encrypted result, and sending the third encrypted result to the terminal, such that the terminal, in a scenario in which the third encrypted result is received thereby, decrypts the third encrypted result with a third private key, to obtain the second public key, encrypts a third verification parameter with the second public key, to obtain a fourth encrypted result, signs the fourth encrypted result with a third private key, to obtain a third signed result, and sends the fourth encrypted result and the third signed result to the smart card; the smart card comprising the second public key and the third public key, the terminal comprising the third private key, and the third public key corresponding to the third private key; the third verification parameter comprising the first terminal fingerprint and the first public key, and the binding instruction being sent to the smart card by the terminal in a scenario in which the binding status is unbound;

S520, in a scenario in which the fourth encrypted result and the third signed result are received, verifying a signature of the third signed result with the third public key, and, in a scenario in which signature verification is passed, decrypting the fourth encrypted result with the second private key, to obtain the third verification parameter.

In some optional embodiments, the first public key and the first private key and the first public key are all generated by the terminal, and the first public key is sent to the smart card by the terminal;
the second public key and the second private key are both generated by the smart card, and the second public key is sent to the terminal by the smart card.

In some optional embodiments, the third public key and the third private key are both generated by the terminal.

In some optional embodiments, in a scenario in which it is determined that the terminal does not pass, the method further comprises:
in a scenario in which the smart card is powered on, sending a second verification instruction to the terminal, such that the terminal, in a scenario in which the second verification instruction is received thereby, verifies first identifier information with second identifier information, and, in a scenario in which verification is passed, sends verification success information to the smart card, the second verification instruction comprising the first identifier information, the first identifier information being used for representing a unique identifier of the smart card, the second identifier information being used for representing a unique identifier of a smart card corresponding to the terminal, and the verification success information being used for representing a first identifier information verification success;
in a scenario in which the verification success information is received, sending a third verification code to the terminal, such that the terminal, in a scenario in which the third verification code is received thereby, generates a first cryptographic key with the first identifier information and the third verification code, and sends the first cryptographic key to the smart card; the first cryptographic key being generated with the third verification code and the first identifier information, and the first cryptographic key being sent to the terminal; the smart card comprising the third verification code;
in a scenario in which the first cryptographic key is received, verifying the first cryptographic key with a second cryptographic key, and, in a scenario in which verification is successful, determining that the terminal passes verification, and the second cryptographic key being generated by the smart card according to the third verification code and the first identifier information.

The verification method in the present embodiment has the same or a similar beneficial effect as the verification method in the above embodiment, and will not be described here in detail.

Based on the same inventive concept, embodiments of the present application also provide a verification method, and the verification method provided by embodiments of the present application is described below in conjunction with the accompanying drawings.

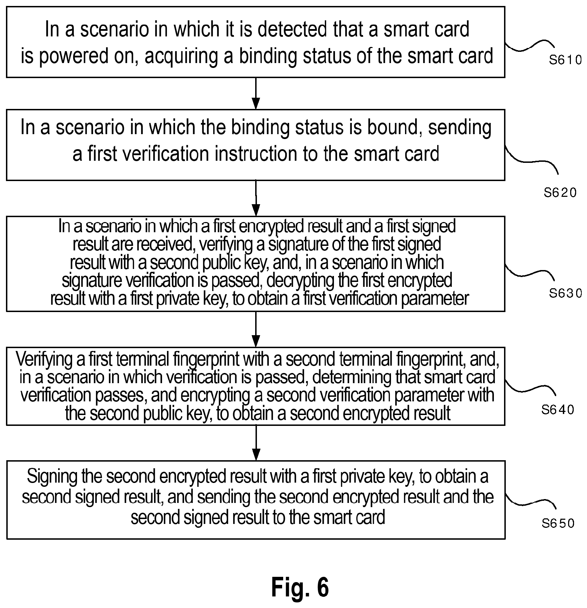

Fig. 6 shows another schematic flow diagram of a verification method provided in embodiments of the present application.

The verification method provided in embodiments of the present application may be applied to a terminal; that is, the method may be executed by a terminal. The terminal is in communication connection with the smart card; as shown in Fig. 6, the method may comprise S610 to S650.

S610, in a scenario in which it is detected that a smart card is powered on, acquiring a binding status of the smart card;

S620, in a scenario in which the binding status is bound, sending a first verification instruction to the smart card, such that the smart card, in a scenario in which the first verification instruction is received thereby, encrypts a first verification parameter with a first public key, to obtain a first encrypted result, signs the first encrypted result with a second private key, to obtain a first signed result, and sends the first encrypted result and the first signed result to the terminal; the smart card comprising the first public key and the first verification parameter, the first verification parameter comprising the first terminal fingerprint and the first verification code; the first terminal fingerprint being used for representing a unique identifier of a terminal corresponding to the smart card;

S630, in a scenario in which the first encrypted result and the first signed result are received, verifying a signature of the first signed result with a second public key, and, in a scenario in which signature verification is passed, decrypting the first encrypted result with a first private key, to obtain the first verification parameter; the terminal comprising the second public key and the first private key, the first public key corresponding to the first private key, and the second public key corresponding to the second private key;

S640, verifying the first terminal fingerprint with a second terminal fingerprint, and, in a scenario in which verification is passed, determining that the smart card verification passes, and encrypting the second verification parameter with the second public key, to obtain a second encrypted result; the terminal comprising a second verification code and the second terminal fingerprint, the second verification parameter comprising the second terminal fingerprint, the first verification code and the second verification code, and the second terminal fingerprint being used for representing a unique identifier of the terminal;

S650, signing the second encrypted result with the first private key, to obtain a second signed result, and sending the second encrypted result and the second signed result to the smart card, such that the smart card, in a scenario in which the second encrypted result and the second signed result are received thereby, verifies a signature of the second signed result with the first public key, and, in a scenario in which signature verification is passed, decrypts the second encrypted result with the second private key, to obtain the second verification parameter, and, in a scenario in which the second verification parameter is passed, determines that the terminal verification passes.

According to the verification method provided in embodiments of the present application, the smart card verifies the first terminal fingerprint by means of the second terminal fingerprint, and determines whether the terminal passes verification, and the terminal verifies whether the smart card passes verification by means of the second verification parameter. In a scenario in which the terminal verification passes and the smart card verification passes, the terminal and the smart card are legitimate relative to each other, and the terminal and the smart card can be bound to each other. In summary, embodiments of the present application are able to verify legitimacy between the smart card and the terminal. In addition, embodiments of the present application encrypt and sign the first verification parameter and the second verification parameter, improving the security of data transmission.

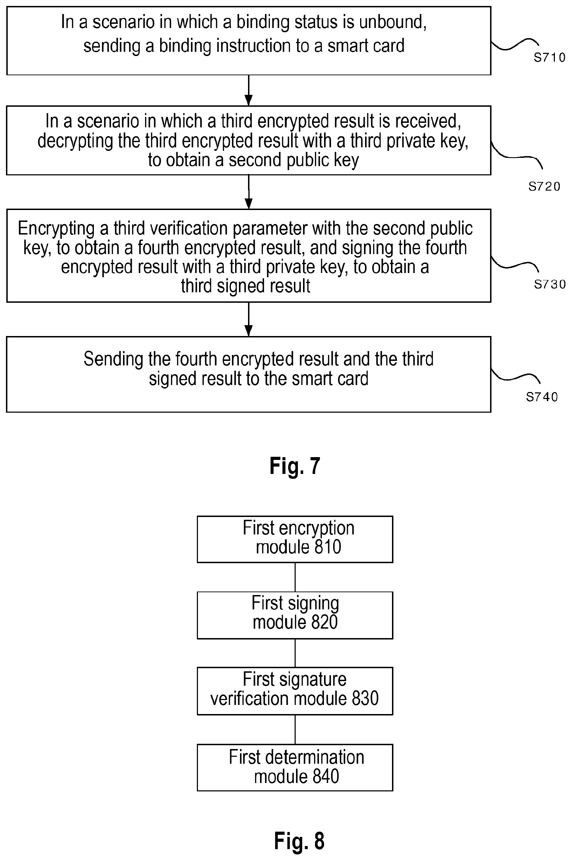

In some optional embodiments, as shown in Fig. 7, before the step of acquiring the binding status of the smart card, i.e. before S410, the method further comprises:
in a scenario in which the binding status is unbound, sending a binding instruction to the smart card, such that the smart card, in a scenario in which the binding instruction is received thereby, encrypts the second public key with a third public key, to obtain a third encrypted result;
in a scenario in which the third encrypted result is received, decrypting the third encrypted result with a third private key, to obtain the second public key; the third encrypted result being obtained by the smart card encrypting the second public key with the third public key, the smart card comprising the second public key and the third public key, the terminal comprising the third private key, and the third public key corresponding to the third private key;
encrypting a third verification parameter with the second public key, to obtain a fourth encrypted result, and signing the fourth encrypted result with the third private key, to obtain a third signed result, the third verification parameter comprising a first terminal fingerprint and the first public key;
sending the fourth encrypted result and the third signed result to the smart card, such that the smart card, in a scenario in which the fourth encrypted result and the third signed result are received thereby, verifies a signature of the third signed result with the third public key, and, in a scenario in which signature verification is passed, decrypts the fourth encrypted result with the second private key, to obtain the third verification parameter.

In some optional embodiments, the method further comprises:
in a scenario in which a second verification instruction is received, verifying first identifier information with second identifier information, and, in a scenario in which verification is passed, sending verification success information to the smart card, such that the smart card, in a scenario in which the verification success information is received thereby, sends a third verification code to the terminal, the smart card comprising the third verification code; the second verification instruction comprising the first identifier information, the first identifier information being used for representing a unique identifier of the smart card, the second identifier information being used for representing a unique identifier of a smart card corresponding to the terminal, and the verification success information being used for representing a first identifier information verification success;
in a scenario in which the third verification code is received, generating a first cryptographic key with the first identifier information and the third verification code, and sending the first cryptographic key to the smart card, such that the smart card, in a scenario in which the first cryptographic key is received thereby, verifies the first cryptographic key with a second cryptographic key, and, in a scenario in which verification is successful, determines that the terminal passes verification, the second cryptographic key being generated by the smart card according to the third verification code and the first identifier information.

The verification method in the present embodiment has the same or a similar beneficial effect as the verification method in the above embodiment, and will not be described here in detail.

Based on the same inventive concept, embodiments of the present application also provide a verification apparatus, and the verification apparatus provided by embodiments of the present application is described below in conjunction with the accompanying drawings.

Fig. 8 shows a schematic structural diagram of a verification apparatus provided in embodiments of the present application.

The verification apparatus provided in embodiments of the present application may be applied to a smart card, and the smart card is in communication connection with a terminal. As shown in Fig. 8, the verification apparatus provided in embodiments of the present application may comprise a first encryption module 810, a first signing module 820, a first signature verification module 830 and a first determination module 840.

The first encryption module 810 is used, in a scenario in which a first verification instruction is received thereby, for encrypting a first verification parameter with a first public key, to obtain a first encrypted result, a smart card comprising the first public key and the first verification parameter, and the first verification parameter comprising a first terminal fingerprint and a first verification code; the first terminal fingerprint being used for representing a unique identifier of a terminal corresponding to the smart card, and a first verification instruction being sent to the smart card by the terminal in a scenario in which the terminal detects that the smart card is powered on and acquires a binding status of the smart card, and the binding status is bound.

The first signing module 820 is used for signing the first encrypted result with a second private key, to obtain a first signed result, and sending the first encrypted result and the first signed result to the terminal, such that the terminal, in a scenario in which the first encrypted result and the first signed result are received thereby, verifies a signature of the first signed result with a second public key, and, in a scenario in which signature verification is passed, decrypts the first encrypted result with a first private key, to obtain the first verification parameter, and verifies the first terminal fingerprint with a second terminal fingerprint, and, in a scenario in which verification is passed, determines that the smart card verification passes, and encrypts a second verification parameter with the second public key, to obtain a second encrypted result, signs the second encrypted result with the first private key, to obtain a second signed result, and sends the second encrypted result and the second signed result to the smart card; the terminal comprising the second public key and the first private key, the first public key corresponding to the first private key, and the second public key corresponding to the second private key; the terminal comprising a second verification code and a second terminal fingerprint, the second verification parameter comprising the second terminal fingerprint, the first verification code and the second verification code, and the second terminal fingerprint being used for representing a unique identifier of the terminal.

The first signature verification module 830 is used, in a scenario in which the second encrypted result and the second signed result are received thereby, for verifying a signature of the second signed result with the first public key, and, in a scenario in which signature verification is passed, decrypting the second encrypted result with the second private key, to obtain the second verification parameter.

The first determination module 840 is used, in a scenario in which the second verification parameter verification is passed, for determining that the terminal verification passes.

According to the verification apparatus provided in embodiments of the present application, the smart card verifies the first terminal fingerprint by means of the second terminal fingerprint, and determines whether the terminal passes verification, and the terminal verifies whether the smart card passes verification by means of the second verification parameter. In a scenario in which the terminal verification passes and the smart card verification passes, the terminal and the smart card are legitimate relative to each other, and the terminal and the smart card can be bound to each other. In summary, embodiments of the present application are able to verify legitimacy between the smart card and the terminal. In addition, embodiments of the present application encrypt and sign the first verification parameter and the second verification parameter, improving the security of data transmission.

In some optional embodiments, the verification apparatus may further comprise:
a second encryption module, which is used, in a scenario in which a binding instruction sent by the terminal is received thereby, for encrypting the second public key with a third public key, to obtain a third encrypted result, and sending the third encrypted result to the terminal, such that the terminal, in a scenario in which the third encrypted result is received thereby, decrypts the third encrypted result with a third private key, to obtain the second public key, encrypts a third verification parameter with the second public key, to obtain a fourth encrypted result, signs the fourth encrypted result with a third private key, to obtain a third signed result, and sends the fourth encrypted result and the third signed result to the smart card; the smart card comprising the second public key and the third public key, the terminal comprising the third private key, and the third public key corresponding to the third private key; the third verification parameter comprising the first terminal fingerprint and the first public key, and the binding instruction being sent to the smart card by the terminal in a scenario in which the binding status is unbound;
a third signature verification module, which is used, in a scenario in which the fourth encrypted result and the third signed result are received thereby, for verifying a signature of the third signed result with the third public key, and, in a scenario in which signature verification is passed, decrypting the fourth encrypted result with the second private key, to obtain the third verification parameter.

In some optional embodiments, the first public key and the first private key and the first public key are all generated by the terminal, and the first public key is sent to the smart card by the terminal;
the second public key and the second private key are both generated by the smart card, and the second public key is sent to the terminal by the smart card.

In some optional embodiments, the third public key and the third private key are both generated by the terminal.

In some optional embodiments, in a scenario in which it is determined that the terminal does not pass, the apparatus further comprises:
a second sending module, which is used, in a scenario in which the smart card is powered on, for sending a second verification instruction to the terminal, such that the terminal, in a scenario in which the second verification instruction is received thereby, verifies first identifier information with second identifier information, and, in a scenario in which verification is passed, sends verification success information to the smart card, the second verification instruction comprising the first identifier information, the first identifier information being used for representing a unique identifier of the smart card, the second identifier information being used for representing a unique identifier of a smart card corresponding to the terminal, and the verification success information being used for representing a first identifier information verification success;
a third sending module, which is used, in a scenario in which the verification success information is received thereby, for sending a third verification code to the terminal, such that the terminal, in a scenario in which the third verification code is received thereby, generates a first cryptographic key with the first identifier information and the third verification code, and sends the first cryptographic key to the smart card; the first cryptographic key being generated with the third verification code and the first identifier information, and the first cryptographic key being sent to the terminal; the smart card comprising the third verification code;
a second determination module, which is used, in a scenario in which the first cryptographic key is received, for verifying the first cryptographic key with a second cryptographic key, and, in a scenario in which verification is successful, determining that the terminal passes verification, and the second cryptographic key being generated by the smart card according to the third verification code and the first identifier information.

The verification apparatus in the present embodiment has the same or a similar beneficial effect as the verification method in the above embodiment, and will not be described here in detail.

Based on the same inventive concept, embodiments of the present application also provide a verification method, and the verification apparatus provided by embodiments of the present application is described below in conjunction with the accompanying drawings.

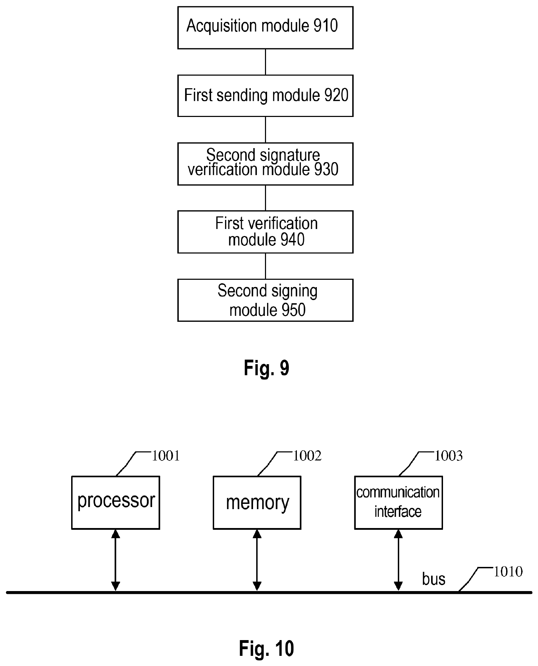

Fig. 9 shows another schematic structural diagram of a verification apparatus provided in embodiments of the present application.

The verification apparatus provided in embodiments of the present application may be applied to a terminal, and the terminal is in communication connection with a smart card. As shown in Fig. 9, the verification apparatus provided in embodiments of the present application may comprise an acquisition module 910, a first sending module 920, a second signature verification module 930, a first signature verification module 940 and a second signing module 950.

The acquisition module 910 is used, in a scenario in which it is detected that the smart card is powered on, for acquiring a binding status of the smart card.

The first sending module 920 is used, in a scenario in which the binding status is bound, for sending a first verification instruction to the smart card, such that the smart card, in a scenario in which the first verification instruction is received thereby, encrypts a first verification parameter with a first public key, to obtain a first encrypted result, signs the first encrypted result with a second private key, to obtain a first signed result, and sends the first encrypted result and the first signed result to the terminal; the smart card comprising the first public key and the first verification parameter, the first verification parameter comprising the first terminal fingerprint and the first verification code; the first terminal fingerprint being used for representing a unique identifier of a terminal corresponding to the smart card.

The second signature verification module 930 is used, in a scenario in which the first encrypted result and the first signed result are received thereby, for verifying a signature of the first signed result with a second public key, and, in a scenario in which signature verification is passed, decrypting the first encrypted result with a first private key, to obtain the first verification parameter; the terminal comprising the second public key and the first private key, the first public key corresponding to the first private key, and the second public key corresponding to the second private key.

The first verification module 940 is used for verifying the first terminal fingerprint with a second terminal fingerprint, and, in a scenario in which verification is passed, determining that the smart card verification passes, and encrypting the second verification parameter with the second public key, to obtain a second encrypted result; the terminal comprising a second verification code and the second terminal fingerprint, the second verification parameter comprising the second terminal fingerprint, the first verification code and the second verification code, and the second terminal fingerprint being used for representing a unique identifier of the terminal.

The second signing module 950 is used for signing the second encrypted result with the first private key, to obtain a second signed result, and sending the second encrypted result and the second signed result to the smart card, such that the smart card, in a scenario in which the second encrypted result and the second signed result are received thereby, verifies a signature of the second signed result with the first public key, and, in a scenario in which signature verification is passed, decrypts the second encrypted result with the second private key, to obtain the second verification parameter, and, in a scenario in which the second verification parameter verification is passed, determines that the terminal verification passes.

According to the verification apparatus provided in embodiments of the present application, the smart card verifies the first terminal fingerprint by means of the second terminal fingerprint, and determines whether the terminal passes verification, and the terminal verifies whether the smart card passes verification by means of the second verification parameter. In a scenario in which the terminal verification passes and the smart card verification passes, the terminal and the smart card are legitimate relative to each other, and the terminal and the smart card can be bound to each other. In summary, embodiments of the present application are able to verify legitimacy between the smart card and the terminal. In addition, embodiments of the present application encrypt and sign the first verification parameter and the second verification parameter, improving the security of data transmission.

In some optional embodiments, the verification apparatus further comprises:
a fourth sending module, which is used, in a scenario in which the binding status is unbound, for sending a binding instruction to the smart card, such that the smart card, in a scenario in which the binding instruction is received thereby, encrypts the second public key with a third public key, to obtain a third encrypted result;
a first decryption module, which is used, in a scenario in which the third encrypted result is received thereby, for decrypting the third encrypted result with a third private key, to obtain the second public key; the third encrypted result being obtained by the smart card encrypting the second public key with the third public key, the smart card comprising the second public key and the third public key, the terminal comprising the third private key, and the third public key corresponding to the third private key;
a fourth encryption module, which is used for encrypting a third verification parameter with the second public key, to obtain a fourth encrypted result, and signing the fourth encrypted result with the third private key, to obtain a third signed result, the third verification parameter comprising a first terminal fingerprint and the first public key;
a fifth sending module, which is used for sending the fourth encrypted result and the third signed result to the smart card, such that the smart card, in a scenario in which the fourth encrypted result and the third signed result are received thereby, verifies a signature of the third signed result with the third public key, and, in a scenario in which signature verification is passed, decrypts the fourth encrypted result with the second private key, to obtain the third verification parameter.

In some optional embodiments, the verification apparatus further comprises:
a second verification module, which is used, in a scenario in which a second verification instruction is received thereby, for verifying first identifier information with second identifier information, and, in a scenario in which verification is passed, sending verification success information to the smart card, such that the smart card, in a scenario in which the verification success information is received thereby, sends a third verification code to the terminal, the smart card comprising the third verification code; the second verification instruction comprising the first identifier information, the first identifier information being used for representing a unique identifier of the smart card, the second identifier information being used for representing a unique identifier of a smart card corresponding to the terminal, and the verification success information being used for representing a first identifier information verification success;
a generation module, which is used, in a scenario in which the third verification code is received thereby, for generating a first cryptographic key with the first identifier information and the third verification code, and sending the first cryptographic key to the smart card, such that the smart card, in a scenario in which the first cryptographic key is received thereby, verifies the first cryptographic key with a second cryptographic key, and, in a scenario in which verification is successful, determines that the terminal passes verification, the second cryptographic key being generated by the smart card according to the third verification code and the first identifier information.

The verification apparatus in the present embodiment has the same or a similar beneficial effect as the verification method in the above embodiment, and will not be described here in detail.

Embodiments of the present application further provide an electronic device, the electronic device comprising: a processor and a memory that stores a program instruction; when the processor executes the program instruction, the method provided in any one of the embodiments shown in Figs. 2 - 4 is implemented.

Embodiments of the present application further provide a computer-readable storage medium, the computer-readable storage medium having stored thereon a computer program instruction which, when executed by a processor, implements the method provided in any one of the embodiments shown in Figs. 2 - 7.

Embodiments of the present application further provide a computer program product, wherein an instruction in the computer program product, when executed by a processor of an electronic device, enables the electronic device to execute the method provided in any one of the embodiments shown in Figs. 2 - 7.

Fig. 10 shows a hardware structural schematic diagram of an electronic device provided in embodiments of the present application.

The electronic device may comprise a processor 1001 and a memory 1002 that stores a computer program instruction.

Specifically, the processor 1001 may comprise a central processor (CPU), or an application specific integrated circuit (ASIC), or one or more integrated circuits configurable to implement embodiments of the present application.

The memory 1002 may comprise a large-capacity memory for data or instructions. As an example but without limitation, the memory 1002 may comprise a hard disk drive (HDD), a floppy disk drive, flash memory, an optical disk, a magneto-optical disk, magnetic tape or a universal serial bus (USB) drive, or a combination of two or more of the above. Where suitable, the memory 1002 may comprise a removable or non-removable (or fixed) medium. Where suitable, the memory 1002 may be inside or outside a general gateway disaster recovery device. In a specific embodiment, the memory 1002 is a non-volatile solid-state memory.

In a specific embodiment, the memory 1002 comprises read-only memory (ROM). Where suitable, the ROM may be a mask-programmed ROM, a programmable ROM (PROM), an erasable PROM (EPROM), an electrically erasable PROM (EEPROM), an electrically alterable ROM (EAROM) or a flash memory, or a combination of two or more of these.

The memory may comprise read-only memory (ROM), random access memory (RAM),a magnetic disk storage medium device, an optical storage medium device, a flash memory device, or an electrical, optical or other physical/tangible memory storage device. Thus, in general, the memory comprises one or more tangible (non-transient) readable storage media (such as a memory device) encoded with software comprising computer-executable instructions, and when the software is executed (e.g. by one or more processors), it is operable to execute the operations described with reference to the method according to an aspect of the present application.

The processor 1001 reads and executes the program instructions stored in the memory 1002, to implement any one of the methods in the embodiments above.

In an example, the electronic device may further comprise a communication interface 1003 and a bus 1010. As shown in Fig. 10, the processor 1001, the memory 1002 and the communication interface 1003 are connected, and communicate with each other, via the bus 1010.

The communication interface 1003 is mainly used to realize communication between the modules, apparatuses, units and/or devices in embodiments of the present application.

The bus 1010 comprises hardware, software or both, and couples the components of an electronic device to each other. As an example but without limitation, the bus may comprise an accelerated graphics port (AGP) or another graphics bus, an enhanced industry standard architecture (EISA) bus, a front side bus (FSB), HyperTransport (HT) Interconnect, an industry standard architecture (ISA) bus, InfiniBand interconnect, a low pin count (LPC) bus, a memory bus, a micro channel architecture (MCA) bus, a peripheral component interconnect (PCI) bus, a PCI-Express (PCI-X) bus, a serial advanced technology attachment (SATA) bus, a Video Electronics Standards Association local bus (VLB) or another suitable bus, or a combination of two or more of the above. Where suitable, the bus 1010 may comprise one or more buses. Although embodiments of the present application have described and shown a specific bus, the present application takes into account any suitable bus or interconnection.

Embodiments of the present application may be realized by providing a readable storage medium. The readable storage medium has stored thereon a program instruction; when executed by a processor, the program instruction implements any one of the methods in the above embodiments.

It should be clarified that the present application is not limited to the specific configurations and processing described above and shown in the figures. For conciseness, a detailed description of known methods is omitted here. In the embodiments above, a number of specific steps have been described and shown as examples. However, the method process of the present application is not limited to the specific steps described and shown, and those skilled in the art will be able to make various changes, alterations and additions, or change the order of steps, after grasping the spirit of the present application.

The functional blocks shown in the structural block diagrams above may be realized as hardware, software, firmware or a combination thereof. When realized as hardware, they may for example be electronic circuits, application specific integrated circuits (ASIC), suitable firmware, plugins, function cards, etc. When realized as software, the elements of the present application are programs or code segments used to execute necessary tasks. The programs or code segments may be stored in a machine-readable medium, or transmitted on a transmission medium or communication link by means of data signals carried in a carrier wave. The "machine-readable medium" may comprise any medium capable of storing or transmitting information. Examples of machine-readable media include electronic circuits, semiconductor memory devices, ROM, flash memory, erasable ROM (EROM), floppy disks, CD-ROM, optical disks, hard disks, optical fiber media, radio frequency (RF) links, etc. The code segments may be downloaded via a computer network such as the internet or intranet.

It must also be explained that the exemplary embodiments mentioned in the present application describe methods or systems as a series of steps or apparatuses. However, the present application is not limited to the order of steps above; that is to say, steps may be executed in the order mentioned in the embodiments, or in a different order from that in the embodiments, or a number of steps may be executed simultaneously.

Various aspects of the present application have been described above with reference to flow charts and/or block diagrams of the method, apparatus (system) and program product according to embodiments of the present application. It should be understood that each box in the flow charts and/or block diagrams, and combinations of boxes in the flow charts and/or block diagrams, may be realized by program instructions. These program instructions may be supplied to a processor of a general-purpose computer, dedicated computer or other programmable data processing apparatus to produce a machine, such that these instructions executed by means of the processor of the computer or other programmable data processing apparatus enable the functions/actions specified in one or more boxes of the flow charts and/or block diagrams to be realized. Such a processor may be, but is not limited to being, a general-purpose processor, a dedicated processor, a special application processor or a field programmable logic circuit. It will also be understood that each box in the block diagrams and/or flow charts, and combinations of boxes in the block diagrams and/or flow charts, may also be realized by dedicated hardware executing specific functions or actions, or may be realized by a combination of dedicated hardware and computer instructions.

The above are merely particular embodiments of the present application; those skilled in the art will clearly understand that for convenience and conciseness of description, the specific operating processes of the systems, modules and units described above may refer to the corresponding processes in the method embodiments above, and are not described again here. It should be understood that the scope of protection of the present application is not limited to this; any person skilled in the art could easily conceive of various equivalent modifications or substitutions within the technical scope disclosed in the present application, and all such modifications or substitutions shall be included in the scope of protection of the present application.

## Claims

1. A verification method, **characterized by** being applied to a smart card, the smart card being in communication connection with a terminal, the method comprising:
in a scenario in which a first verification instruction is received, encrypting a first verification parameter with a first public key to obtain a first encrypted result, the smart card comprising the first public key and the first verification parameter, and the first verification parameter comprising the first terminal fingerprint and a first verification code; the first terminal fingerprint being used for representing a unique identifier of a terminal corresponding to the smart card, and the first verification instruction being sent to the smart card by the terminal in a scenario in which the terminal detects that the smart card is powered on and acquires a binding status of the smart card, and the binding status is bound;
signing the first encrypted result with a second private key, to obtain a first signed result, and sending the first encrypted result and the first signed result to the terminal, such that the terminal, in a scenario in which the first encrypted result and the first signed result are received thereby, verifies a signature of the first signed result with a second public key, and, in a scenario in which signature verification is passed, decrypts the first encrypted result with a first private key, to obtain the first verification parameter, and verifies the first terminal fingerprint with a second terminal fingerprint, and, in a scenario in which verification is passed, determines that the smart card verification passes, and encrypts a second verification parameter with the second public key, to obtain a second encrypted result, signs the second encrypted result with the first private key, to obtain a second signed result, and sends the second encrypted result and the second signed result to the smart card; the terminal comprising the second public key and the first private key, the first public key corresponding to the first private key, and the second public key corresponding to the second private key; the terminal comprising a second verification code and a second terminal fingerprint, the second verification parameter comprising the second terminal fingerprint, the first verification code and the second verification code, and the second terminal fingerprint being used for representing a unique identifier of the terminal;
in a scenario in which the second encrypted result and the second signed result are received, verifying a signature of the second signed result with the first public key, and, in a scenario in which signature verification is passed, decrypting the second encrypted result with the second private key, to obtain the second verification parameter;
in a scenario in which second verification parameter verification is passed, determining that the terminal verification passes.

2. The method as claimed in claim 1, **characterized in that** before the step of encrypting a first verification parameter with a first public key, to obtain a first encrypted result, the method further comprises:
in a scenario in which a binding instruction sent by the terminal is received, encrypting the second public key with a third public key, to obtain a third encrypted result, and sending the third encrypted result to the terminal, such that the terminal, in a scenario in which the third encrypted result is received thereby, decrypts the third encrypted result with a third private key, to obtain the second public key, encrypts a third verification parameter with the second public key, to obtain a fourth encrypted result, signs the fourth encrypted result with a third private key, to obtain a third signed result, and sends the fourth encrypted result and the third signed result to the smart card; the smart card comprising the second public key and the third public key, the terminal comprising the third private key, and the third public key corresponding to the third private key; the third verification parameter comprising the first terminal fingerprint and the first public key, and the binding instruction being sent to the smart card by the terminal in a scenario in which the binding status is unbound;
in a scenario in which the fourth encrypted result and the third signed result are received, verifying a signature of the third signed result with the third public key, and, in a scenario in which signature verification is passed, decrypting the fourth encrypted result with the second private key, to obtain the third verification parameter.

3. The method as claimed in claim 1 or 2, **characterized in that** the first public key and the first private key and the first public key are all generated by the terminal, and the first public key is sent to the smart card by the terminal;
the second public key and the second private key are both generated by the smart card, and the second public key is sent to the terminal by the smart card.

4. The method as claimed in claim 2, **characterized in that** the third public key and the third private key are both generated by the terminal.

5. The method as claimed in claim 1, **characterized in that**, in a scenario in which it is determined that the terminal does not pass, the method further comprises:
in a scenario in which the smart card is powered on, sending a second verification instruction to the terminal, such that the terminal, in a scenario in which the second verification instruction is received thereby, verifies first identifier information with second identifier information, and, in a scenario in which verification is passed, sends verification success information to the smart card, the second verification instruction comprising the first identifier information, the first identifier information being used for representing a unique identifier of the smart card, the second identifier information being used for representing a unique identifier of a smart card corresponding to the terminal, and the verification success information being used for representing a first identifier information verification success;
in a scenario in which the verification success information is received, sending a third verification code to the terminal, such that the terminal, in a scenario in which the third verification code is received thereby, generates a first cryptographic key with the first identifier information and the third verification code, and sends the first cryptographic key to the smart card; the first cryptographic key being generated with the third verification code and the first identifier information, and the first cryptographic key being sent to the terminal; the smart card comprising the third verification code;
in a scenario in which the first cryptographic key is received, verifying the first cryptographic key with a second cryptographic key, and, in a scenario in which verification is successful, determining that the terminal passes verification, and the second cryptographic key being generated by the smart card according to the third verification code and the first identifier information.

6. A verification method, **characterized by** being applied to a terminal, the terminal being in communication connection with a smart card, the method comprising:
in a scenario in which it is detected that the smart card is powered on, acquiring a binding status of the smart card;
in a scenario in which the binding status is bound, sending a first verification instruction to the smart card, such that the smart card, in a scenario in which the first verification instruction is received thereby, encrypts a first verification parameter with a first public key, to obtain a first encrypted result, signs the first encrypted result with a second private key, to obtain a first signed result, and sends the first encrypted result and the first signed result to the terminal; the smart card comprising the first public key and the first verification parameter, the first verification parameter comprising the first terminal fingerprint and the first verification code; the first terminal fingerprint being used for representing a unique identifier of a terminal corresponding to the smart card;
in a scenario in which the first encrypted result and the first signed result are received, verifying a signature of the first signed result with a second public key, and, in a scenario in which signature verification is passed, decrypting the first encrypted result with a first private key, to obtain the first verification parameter; the terminal comprising the second public key and the first private key, the first public key corresponding to the first private key, and the second public key corresponding to the second private key;
verifying the first terminal fingerprint with a second terminal fingerprint, and, in a scenario in which verification is passed, determining that the smart card verification passes, and encrypting the second verification parameter with the second public key, to obtain a second encrypted result; the terminal comprising a second verification code and the second terminal fingerprint, the second verification parameter comprising the second terminal fingerprint, the first verification code and the second verification code, and the second terminal fingerprint being used for representing a unique identifier of the terminal;
signing the second encrypted result with the first private key, to obtain a second signed result, and sending the second encrypted result and the second signed result to the smart card, such that the smart card, in a scenario in which the second encrypted result and the second signed result are received thereby, verifies a signature of the second signed result with the first public key, and, in a scenario in which signature verification is passed, decrypts the second encrypted result with the second private key, to obtain the second verification parameter, and, in a scenario in which verification of the second terminal fingerprint and the first verification code is passed, determines that the terminal verification passes.

7. The method as claimed in claim 6, **characterized in that**, after the step of acquiring a binding status of the smart card, the method further comprises:
in a scenario in which the binding status is unbound, sending a binding instruction to the smart card, such that the smart card, in a scenario in which the binding instruction is received thereby, encrypts the second public key with a third public key, to obtain a third encrypted result;
in a scenario in which the third encrypted result is received, decrypting the third encrypted result with a third private key, to obtain the second public key; the third encrypted result being obtained by the smart card encrypting the second public key with the third public key, the smart card comprising the second public key and the third public key, the terminal comprising the third private key, and the third public key corresponding to the third private key;
encrypting a third verification parameter with the second public key, to obtain a fourth encrypted result, and signing the fourth encrypted result with the third private key, to obtain a third signed result, the third verification parameter comprising a first terminal fingerprint and the first public key;
sending the fourth encrypted result and the third signed result to the smart card, such that the smart card, in a scenario in which the fourth encrypted result and the third signed result are received thereby, verifies a signature of the third signed result with the third public key, and, in a scenario in which signature verification is passed, decrypts the fourth encrypted result with the second private key, to obtain the third verification parameter.

8. The method as claimed in claim 6, **characterized in that** the method further comprises:
in a scenario in which a second verification instruction is received, verifying first identifier information with second identifier information, and, in a scenario in which verification is passed, sending verification success information to the smart card, such that the smart card, in a scenario in which the verification success information is received thereby, sends a third verification code to the terminal, the smart card comprising the third verification code; the second verification instruction comprising the first identifier information, the first identifier information being used for representing a unique identifier of the smart card, the second identifier information being used for representing a unique identifier of a smart card corresponding to the terminal, and the verification success information being used for representing a first identifier information verification success;
in a scenario in which the third verification code is received, generating a first cryptographic key with the first identifier information and the third verification code, and sending the first cryptographic key to the smart card, such that the smart card, in a scenario in which the first cryptographic key is received thereby, verifies the first cryptographic key with a second cryptographic key, and, in a scenario in which verification is successful, determines that the terminal passes verification, the second cryptographic key being generated by the smart card according to the third verification code and the first identifier information.

9. A verification apparatus, **characterized by** being applied to a smart card, the smart card being in communication connection with a terminal, the apparatus comprising:
a first encryption module, which is used, in a scenario in which a first verification instruction is received, for encrypting a first verification parameter with a first public key, to obtain a first encrypted result, the smart card comprising the first public key and the first verification parameter, and the first verification parameter comprising the first terminal fingerprint and a first verification code; the first terminal fingerprint being used for representing a unique identifier of a terminal corresponding to the smart card, and the first verification instruction being sent to the smart card by the terminal in a scenario in which the terminal detects that the smart card is powered on and acquires a binding status of the smart card, and the binding status is bound;
a first signing module, which is used for signing the first encrypted result with a second private key, to obtain a first signed result, and sending the first encrypted result and the first signed result to the terminal, such that the terminal, in a scenario in which the first encrypted result and the first signed result are received thereby, verifies a signature of the first signed result with a second public key, and, in a scenario in which signature verification is passed, decrypts the first encrypted result with a first private key, to obtain the first verification parameter, and verifies the first terminal fingerprint with a second terminal fingerprint, and, in a scenario in which verification is passed, determines that the smart card verification passes, and encrypts a second verification parameter with the second public key, to obtain a second encrypted result, signs the second encrypted result with the first private key, to obtain a second signed result, and sends the second encrypted result and the second signed result to the smart card; the terminal comprising the second public key and the first private key, the first public key corresponding to the first private key, and the second public key corresponding to the second private key; the terminal comprising a second verification code and a second terminal fingerprint, the second verification parameter comprising the second terminal fingerprint, the first verification code and the second verification code, and the second terminal fingerprint being used for representing a unique identifier of the terminal;
a first signature verification module, which is used, in a scenario in which the second encrypted result and the second signed result are received thereby, for verifying a signature of the second signed result with the first public key, and, in a scenario in which signature verification is passed, decrypting the second encrypted result with the second private key, to obtain the second verification parameter;
a first determination module, which is used, in a scenario in which verification of the second terminal fingerprint and the first verification code is passed, for determining that the terminal verification passes.

10. A verification apparatus, **characterized by** being applied to a terminal, the terminal being in communication connection with a smart card, the apparatus comprising:
an acquisition module, which is used, in a scenario in which it is detected that the smart card is powered on, for acquiring a binding status of the smart card;
a first sending module, which is used, in a scenario in which the binding status is bound, for sending a first verification instruction to the smart card, such that the smart card, in a scenario in which the first verification instruction is received thereby, encrypts a first verification parameter with a first public key, to obtain a first encrypted result, signs the first encrypted result with a second private key, to obtain a first signed result, and sends the first encrypted result and the first signed result to the terminal; the smart card comprising the first public key and the first verification parameter, the first verification parameter comprising the first terminal fingerprint and the first verification code; the first terminal fingerprint being used for representing a unique identifier of a terminal corresponding to the smart card;
a second signature verification module, which is used, in a scenario in which the first encrypted result and the first signed result are received thereby, for verifying a signature of the first signed result with a second public key, and, in a scenario in which signature verification is passed, decrypting the first encrypted result with a first private key, to obtain the first verification parameter; the terminal comprising the second public key and the first private key, the first public key corresponding to the first private key, and the second public key corresponding to the second private key;
a first verification module, which is used for verifying the first terminal fingerprint with a second terminal fingerprint, and, in a scenario in which verification is passed, determining that the smart card verification passes, and encrypting the second verification parameter with the second public key, to obtain a second encrypted result; the terminal comprising a second verification code and the second terminal fingerprint, the second verification parameter comprising the second terminal fingerprint, the first verification code and the second verification code, and the second terminal fingerprint being used for representing a unique identifier of the terminal;
a second signing module, which is used for signing the second encrypted result with the first private key, to obtain a second signed result, and sending the second encrypted result and the second signed result to the smart card, such that the smart card, in a scenario in which the second encrypted result and the second signed result are received thereby, verifies a signature of the second signed result with the first public key, and, in a scenario in which signature verification is passed, decrypts the second encrypted result with the second private key, to obtain the second verification parameter, and, in a scenario in which verification of the second verification parameter is passed, determines that the terminal verification passes.

11. An electronic device, **characterized in that** the electronic device comprises: a processor and a memory that stores a computer program instruction;
the processor, when executing the computer program instruction, implements the verification method as claimed in any one of claims 1 - 8.

12. A computer-readable storage medium, **characterized in that** the computer-readable storage medium has stored thereon a computer program instruction which, when executed by a processor, implements the verification method as claimed in any one of claims 1 - 8.

13. A computer program product, **characterized in that** an instruction in the computer program product, when executed by a processor of an electronic device, causes the electronic device to implement the verification method as claimed in any one of claims 1 - 8.
